# EUROPÄISCHE PATENTANMELDUNG

(11) **EP 1 967 319 A1**
(43) Veröffentlichungstag der Anmeldung: **10.09.2008**
(21) Anmeldenummer: 08102304.6
(22) Anmeldetag: 05.03.2008
(51) Int. Cl.: B23Q 3/06, B23Q 3/10, B25B 1/10

(54) **Vorrichtung zum Aufspannen von Werkstücken auf einem Bearbeitungszentrum**

(30) Priorität: 06.03.2007 AT 3572007
(71) Anmelder: Muser, Armin, 8053 Graz (AT); Muser, Josef, 8073 Neu-Seiersberg (AT); Muser, Miguel, 8073 Neu-Seiersberg (AT)
(72) Erfinder: Muser, Armin, 8053 Graz (AT); Muser, Josef, 8073 Neu-Seiersberg (AT); Muser, Miguel, 8073 Neu-Seiersberg (AT)
(74) Vertreter: Babeluk, Michael

(57) **Zusammenfassung**

Die Erfindung betrifft eine Vorrichtung zum Aufspannen von Werkstücken (13; 13a, 13b, 13c, 13d, 13e, 13f, 13g, 13g, 13h, 13i, 13j) auf einem Bearbeitungszentrum (1), mit einer Grundplatte (22), die eine Aufnahme für eine Klemmbacke (10) des Bearbeitungszentrums (1) aufweist, und mit mindestens einer in Gebrauchsstellung von der Grundplatte (22) nach oben ragenden Spannfläche mit einer Mehrzahl von Werkstückaufnahmen. Eine verbesserte Einsatzmöglichkeit kann dadurch erreicht werden, dass die Spannfläche einstückig mit der Grundplatte (22) ausgebildet ist.

## Beschreibung

Die Erfindung betrifft eine Vorrichtung zum Aufspannen von Werkstücken auf einem Bearbeitungszentrum, mit einer Grundplatte, die eine Aufnahme für eine Klemmbacke des Bearbeitungszentrums aufweist, und mit mindestens einer in Gebrauchsstellung von der Grundplatte nach oben ragenden Spannfläche mit einer Mehrzahl von Werkstückaufnahmen, die zumindest teilweise als Nuten ausgebildet sind.

In der Serienfertigung ist es heute üblich, Werkstücke weitgehend automatisiert in Bearbeitungszentren zu bearbeiten. Als Bearbeitungszentrum wird eine automatisierte Werkzeugmaschine verstanden, die verschiedene Bearbeitungsvorgänge, wie beispielsweise Bohren, Fräsen oder dergleichen, an dem Werkstücken vornimmt. Um entsprechend hohe Durchsatzraten erzielen zu können, werden in solchen Bearbeitungszentren kleinere Werkstücke zumeist auf sogenannten Spanntürmen befestigt, das sind Vorrichtungen, die eine Vielzahl von Werkstückaufnahmen aufweisen, an denen die einzelnen Werkstücke befestigt werden können. Diese Spanntürme werden am Bearbeitungszentrum festgespannt, um die entsprechenden Bearbeitungsvorgänge zu ermöglichen. Bei der erfindungsgemäßen Vorrichtung handelt es sich um einen solchen Spannturm, wie er beispielsweise in der DE 10 2005 009 177 A beschrieben ist. Ein weiterer Spannturm ist in der US 4,828,240 A dargestellt und erläutert.

Bekannte Spanntürme sind stets aus zwei voneinander getrennten Bauteilen aufgebaut: der eigentliche Spannturm besteht aus einer oder mehreren Aufspannflächen, die in Gebrauchsstellung nach oben ragen und die dazu vorgesehen sind, die einzelnen Werkstücke aufzunehmen. An der Unterseite dieses Bauteils ist in der Regel ein Flansch mit mehreren Bohrungen vorgesehen, der dazu ausgebildet ist, auf eine sogenannten Palette aufgeschraubt zu werden. Die Palette ist spezifisch für das jeweilige Bearbeitungszentrum ausgebildet und besitzt an ihrer Unterseite eine Aufnahme für eine Klemmbacke des Bearbeitungszentrum, die den Spannturm in eine genau definierte Stellung bringt und in dieser Stellung hält. Dies ermöglicht es einerseits ein und denselben Spannturm für unterschiedliche Bearbeitungszentren zu verwenden und andererseits nacheinander mehrere Spanntürme auf derselben Palette zu befestigen.

Im Zuge weitreichender Optimierung von Bearbeitungszentren hat es sich jedoch herausgestellt, dass man mit einem solchen Konzept von Spanntürmen an konstruktive Grenzen stößt, insbesondere was die Zugänglichkeit für einzelnen Werkstücke betrifft. Außerdem ist der Herstellungs- und Montageaufwand für solche Konzepte relativ groß.

Aus der DE 21 53 463 A ist eine Vorrichtung zum Aufspannen von Werkstücken bekannt, bei der an Spannflächen Befestigungspunkte für Spanneinheiten vorgesehen sind. Auf diese Weise ist es möglich ein Werkstück zu fixieren, es sind jedoch der Positionierungsgenauigkeit und den aufbringbaren Kräfte enge Grenzen gesetzt. Eine weitere bekannte Lösung mit ähnlichen Nachteilen ist in der DE 44 37 310 A offenbart.

Aufgabe der vorliegenden Erfindung ist es, diese Nachteile zu vermeiden und eine Vorrichtung zum Aufspannen von Werkstücken anzugeben, die einen einfachen Aufbau aufweist und die eine verbesserte Zugänglichkeit der Werkstücke für die Bearbeitungswerkzeuge bietet.

Eine weitere Aufgabe der vorliegenden Erfindung ist es, den Materialaufwand und damit letztlich die Herstellungskosten zu minimieren.

Erfindungsgemäß ist vorgesehen, dass die Spannfläche einstückig mit der Grundplatte ausgebildet ist und dass Spannelemente vorgesehen sind, die mit Spannbacken zusammenwirken, die in den Nuten geführt sind.

Wesentlich an der vorliegenden Erfindung ist, dass es durch den Wegfall der Befestigungsmittel zwischen Grundplatte und der Spannfläche, bzw. den Spannflächen eine konstruktive Ausbildung des Spannturms zu erreichen, die einen verbesserten Zugang zu den einzelnen Werkstücken ermöglicht. Darüber hinaus kann eine verbesserte Genauigkeit bei der Werkzeugaufspannung und eine vergrößerte Steifigkeit erzielt werden, was sich positiv auf die Qualität der hergestellten Werkstücke auswirkt. Nebeneffekte sind dabei ein einfacher Aufbau und eine kostengünstige Herstellung.

Besonders günstig im Zusammenhang mit der vorliegenden Erfindung ist die Tatsache, dass die Werkstücke durch Betätigung der Spannelemente schnell und sicher fixiert werden können. Die Spannelemente sind vorzugsweise als Spindeln ausgebildet, die mit den beweglichen Spannbacken im Sinne von Schraube und Mutter zusammenwirken. Wenn die Spannelemente mit drehmomentbegrenzten Werkzeugen angezogen werden, können die Aufspannkräfte, die auf das Werkstück ausgeübt werden, genau dosiert werden.

Ein besonders begünstigte Ausführungsvariante der vorliegenden Erfindung sieht vor, dass an der Grundplatte ein prismatischer Aufspannkörper angeformt ist, der mehrere Spannflächen aufweist. Dieser Aufspannkörper kann beispielsweise einen rechteckigen, quadratischen, aber auch einen polygonalen Querschnitt besitzen und wird von den einzelnen Spannflächen begrenzt. Auf diese Weise wird einerseits eine hohe Steifigkeit erreicht und andererseits kann die Anzahl der befestigbaren Werkstücke gesteigert werden.

Eine konstruktiv besonders günstige Lösung ist gegeben, wenn die Grundplatte seitlich über den Querschnitt des Aufspannkörpers hinausragt. Auf diese Weise wird eine vergrößerte Aufstandsfläche der Vorrichtung erreicht und es können größere Werkstücke bearbeitet werden, da die Aufspannflächen weniger weit von der Mittelachse der Vorrichtung entfernt sind.

Die Zugänglichkeit zu den einzelnen Werkstücken, insbesondere im unteren Bereich des Spannturms, kann insbesondere dadurch verbessert werden, dass die Grundplatte einen nach außen abgeschrägten Randbereich aufweist. Auf diese Weise kann eine größere Anzahl von Werkstücken aufgespannt werden und es können in Einzelfällen kürzere Werkzeuge zur Bearbeitung eingesetzt werden, was sich positiv auf die Bearbeitungsgenauigkeit auswirkt.

Die Genauigkeit der Aufspannung kann durch Zentrierstifte verbessert werden, die an der Unterseite der Grundplatte angeordnet sind oder die in Öffnungen der Grundplatte aufgenommen sind.

Die Werkstückaufnahmen können in an sich bekannter Weise als Nuten mit schwalbenschwanzförmigen oder T-förmigem Querschnitt ausgebildet sein, die bevorzugt waagrecht angeordnet sind. Es ist aber gleichzeitig oder alternativ auch möglich, dass die Werkstückaufnahmen als Bohrungen in der Spannfläche ausgebildet sind.

In der Folge wird die vorliegende Erfindung anhand der in den Figuren dargestellten Ausführungsbeispielen näher erläutert. Es zeigen:
- Fig. 1: eine allgemeine schematische Darstellung eines Fräszentrums mit einem aufgespannten Werkstück;
- Fig. 2: ein Fräszentrum entsprechend Fig. 1 mit einem Werkzeugturm entsprechend dem Stand der Technik;
- Fig. 3: ein Bearbeitungszentrum mit einer erfindungsgemäßen Vorrichtung;
- Fig. 4: ein Ausführungsbeispiel einer erfindungsgemäßen Vorrichtung im Detail;
- Fig. 5a: und Fig. 5b eine weitere Ausführungsvariante der erfindungsgemäßen Vorrichtung ohne und mit aufgespannten Werkstücken;
- Fig. 6a: und Fig. 6b eine alternative Verwendung der Vorrichtung entsprechend Fig. 5a und Fig. 5b; und
- Fig. 7: eine axonometrische Darstellung einer erfindungsgemäßen Vorrichtung im Verwendungszustand.

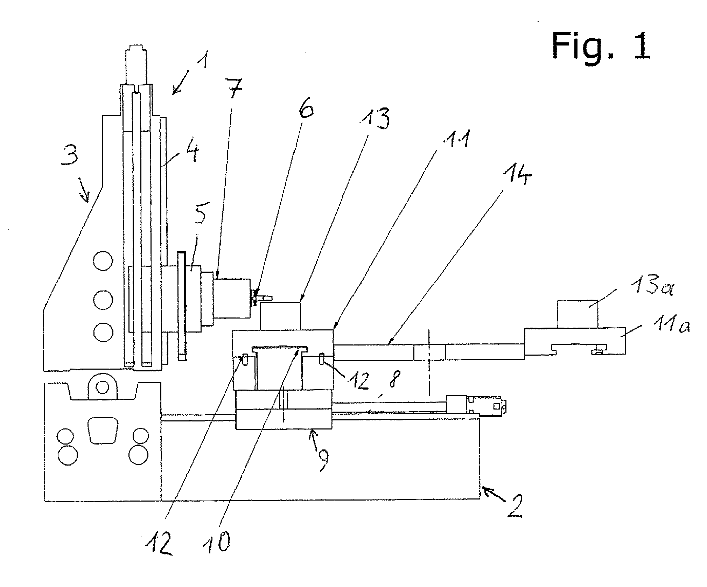

Das allgemein mit 1 bezeichnete Bearbeitungszentrum besteht aus einem Maschinenbett 2 und einem Werkzeugführungsrahmen 3, auf dem Führungen 4 angeordnet sind, in denen ein Schlitten 5 gleitet, der ein Werkzeug 6 in einer Aufspannung 7 trägt. In einer Führung 8 des Maschinenbettes 2 ist ein Aufspanntisch 9 beweglich befestigt, der eine Klemmbacke 10 aufweist, mit der eine Palette 11 in einer genau bestimmten Stellung gehalten werden kann. Zentrierstifte 12 dienen zur genauen Festlegung der Position der Palette 11 auf dem Aufspannschlitten 9. In Fig. 1 ist ein Werkstück 13 direkt auf der Palette 11 befestigt. Ein Palettenwechsler 14 ermöglicht einen schnellen Wechsel der Palette 11 mit dem Werkstück 13 auf eine weitere Palette 11a mit einem weiteren Werkstück 13a.

Die Paletten 11, 11a sind dabei je nach Maschinenfabrikat unterschiedlich ausgeführt, da sich auch der Aufspanntisch 9 von Fabrikat zu Fabrikat unterscheidet. Üblicherweise ist der Aufspannstich 9 bei Vierachsenmaschinen als Drehtisch ausgebildet.

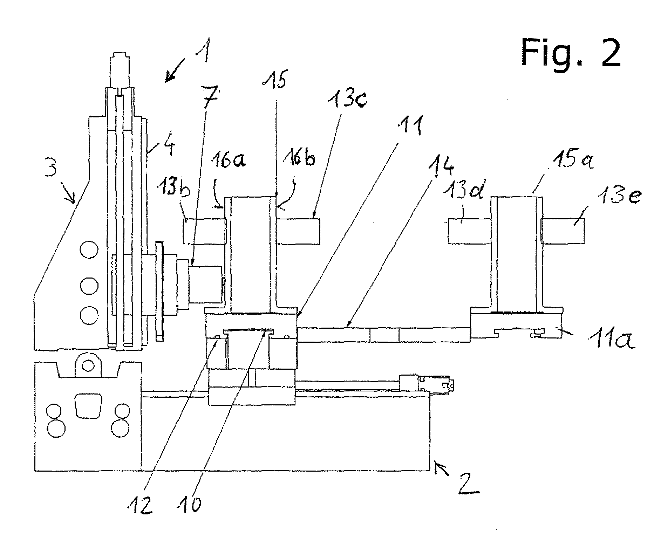

Um die Bearbeitung mehrerer Werkstücke in einer Aufspannung zu ermöglichen, werden sogenannte Spanntürme verwendet, wie dies in Fig. 2 dargestellt ist. Auf der Palette 11 ist in diesem Fall ein Spannturm 15 aufgebracht, der mehrere Werkstücke 13b, 13c trägt. Diese Werkstücke sind auf Aufspannflächen 16a, 16b des Spannturmes 15 festgespannt. Weiters ist ersichtlich, dass durch eine weitere Palette 11a ein weiterer Spannturm 15a mit weiteren Werkstücken 13d, 13e bereitgestellt werden kann, um die nächsten Werkstücke für die Bearbeitung vorzubereiten.

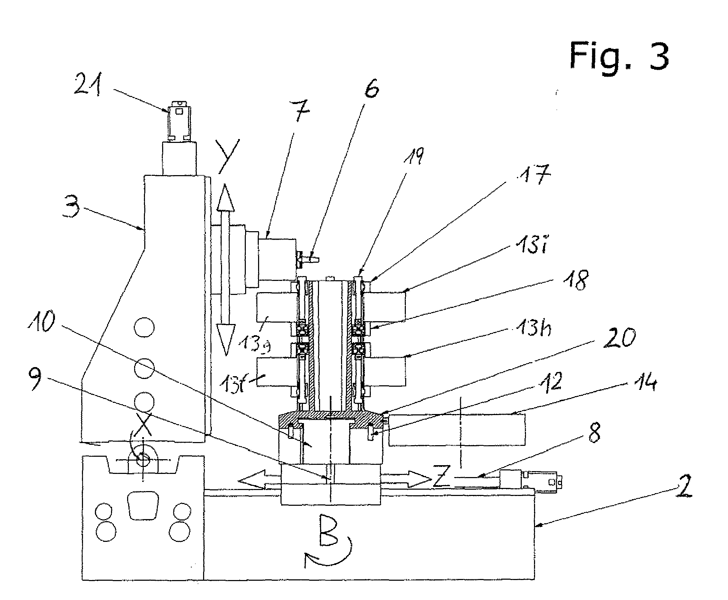

Die Fig. 3 zeigt ein Bearbeitungszentrum, auf dem eine erfindungsgemäße Vorrichtung aufgespannt ist. Die einzelnen Freiheitsgrade, die zur Erreichung aller erforderlichen Arbeitspositionen des Werkzeuges 6 erforderlich sind, sind mit X: Verstellbewegung in Querrichtung, Y: Verstellbewegung in senkrechter Richtung, Z: Verstellbewegung in Längsrichtung und B: Drehbewegung des Aufspanntisches 9 gekennzeichnet. Die erfindungsgemäße Vorrichtung, die insgesamt mit 20 bezeichnet ist, besitzt fixe Spannbacken 17 und verstellbare Spannbacken 18 mit Spindeln 19, um eine Mehrzahl von Werkstücken 13f, 13g, 13h, 13i festzuspannen. Ein Motor zur Höhenverstellung (Bewegung in Y-Richtung) ist mit 21 bezeichnet.

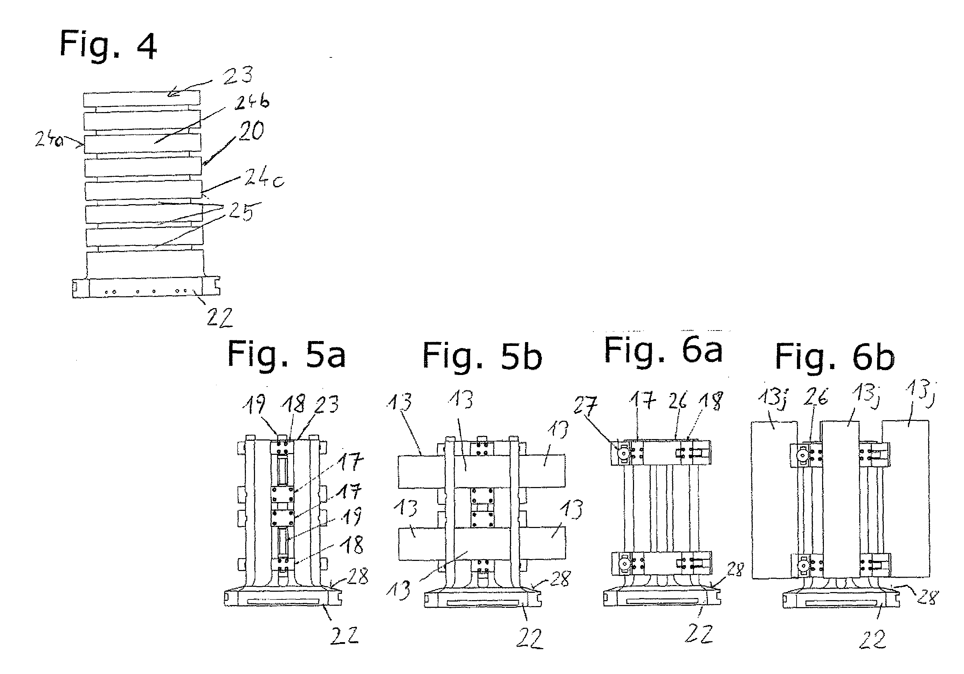

Aus Fig. 4 ist der allgemeine Aufbau einer erfindungsgemäßen Vorrichtung 20 ersichtlich. Die Vorrichtung 20 besteht aus einer Grundplatte 22 und dem eigentlichen Spannturm 23. Der Spannturm 23 besitzt einen quadratischen Querschnitt und ist von vier Aufspannflächen 24a, 24b, 24c begrenzt. Diese Aufspannflächen 24a, 24b, 24c weisen waagrecht verlaufende Nuten 25 mit T-förmigem Querschnitt auf, in die Spannschuhe zur Befestigung von Werkstücken oder Werkstückhalterungen eingeschoben werden können.

Bei der Ausführungsvariante von Fig. 5a und Fig. 5b sind vertikal verlaufende Nuten vorgesehen, in die feste Spannbacken 17 und verstellbare Spannbacken 18 eingeführt werden können.

Bei der Ausführungsvariante von Fig. 6a und Fig. 6b werden an den festen Spannbacken 17 und den verstellbaren Spannbacken 18 spezielle Halterungen 26 eingespannt, die dazu ausgebildet sind, über spezielle Spannbacken 27 längliche Werkstücke 13j aufspannen zu können.

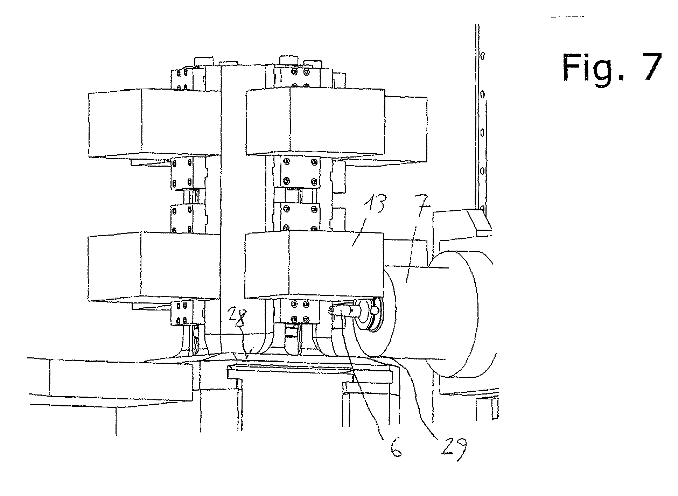

In den Fig. 5a, 5b und Fig. 6a, 6b ist ersichtlich, dass die Grundplatte 22 seitlich über den Spannturm 23 hinausragt, wobei die Randflächen 28 nach außen hin abgeschrägt sind, was die Zugänglichkeit für Werkzeuge vergrößert. Dies ist insbesondere aus der Fig. 7 ersichtlich. Auch bei der Verwendung von kurzen Werkzeugen 6 und relativ niedrig angeordneten Werkstücken 13 kann die Aufspannung 7 für das Werkzeug aufgrund der abgeschrägten Seitenfläche 28 kollisionsfrei verfahren werden.

Die vorliegende Erfindung ermöglicht es, Spanntürme herzustellen, die einen verbesserten Zugang zu den einzelnen Werkstücken ermöglichen.

## Patentansprüche

1. Vorrichtung zum Aufspannen von Werkstücken (13; 13a, 13b, 13c, 13d, 13e, 13f, 13g, 13g, 13h, 13i, 13j) auf einem Bearbeitungszentrum (1), mit einer Grundplatte (22), die eine Aufnahme für eine Klemmbacke (10) des Bearbeitungszentrums (1) aufweist, und mit mindestens einer in Gebrauchsstellung von der Grundplatte (22) nach oben ragenden Spannfläche mit einer Mehrzahl von Werkstückaufnahmen, die zumindest teilweise als Nuten (25) ausgebildet sind, **dadurch gekennzeichnet, dass** die Spannfläche einstückig mit der Grundplatte (22) ausgebildet ist und dass Spannelemente vorgesehen sind, die mit Spannbacken (17, 18) zusammenwirken, die in den Nuten (25) geführt sind.

2. Vorrichtung nach Anspruch 1, **dadurch gekennzeichnet, dass** die Spannelemente als Spindeln (19) ausgebildet sind.

3. Vorrichtung nach Anspruch 2, **dadurch gekennzeichnet, dass** die Spindeln (19) mit verstellbaren Spannbacken (18) zusammenwirken.

4. Vorrichtung nach einem der Ansprüche 1 bis 3, **dadurch gekennzeichnet, dass** an der Grundplatte (22) ein prismatischer Aufspannkörper angeformt ist, der mehrere Spannflächen aufweist.

5. Vorrichtung nach Anspruch 1 bis 4, **dadurch gekennzeichnet, dass** die Grundplatte (22) seitlich über den Querschnitt des Aufspannkörpers hinausragt.

6. Vorrichtung nach einem der Ansprüche 1 bis 5, **dadurch gekennzeichnet, dass** die Grundplatte (22) einen nach außen abgeschrägten Randbereich (28) aufweist.

7. Vorrichtung nach Anspruch 1 bis 6, **dadurch gekennzeichnet, dass** an der Unterseite der Grundplatte (22) mehrere Zentrierstifte (12) oder Öffnungen für Zentrierstifte (12) vorgesehen sind.

8. Vorrichtung nach Anspruch 1 bis 7, **dadurch gekennzeichnet, dass** die Werkstückaufnahmen als Nuten (25) ausgebildet sind.

9. Vorrichtung nach Anspruch 8, **dadurch gekennzeichnet, dass** die Nuten (25) in Gebrauchsstellung waagrecht angeordnet sind.

10. Vorrichtung nach Anspruch 1 bis 9, **dadurch gekennzeichnet, dass** die Werkstückaufnahmen als Bohrungen ausgebildet sind.
